# EUROPEAN PATENT APPLICATION

(11) **EP 4 796 781 A1**
(43) Date of publication of application: **26.08.2026**
(21) Application number: 25159847.0
(22) Date of filing: 25.02.2025
(51) Int. Cl.: F03D 7/02, F03D 7/04, F03D 17/00

(54) **WAKE STEERING IN A WIND TURBINE BASED ON CORRECTION OF WIND TURBINE WAKE CENTER DETECTIONS**

(71) Applicant: Siemens Gamesa Renewable Energy A/S, 7330 Brande (DK)
(72) Inventor: Egedal, Per, 7400 Herning (DK)
(74) Representative: SGRE-Association

(57) **Abstract**

The present invention relates to a method to control wake in a wind farm (2) comprising plural of wind turbines (3), where the method includes;
- providing a free wind at the wind farm (2), where the free wind includes a free wind direction (10),
- using the free wind direction (10) to identify at least one waked wind turbine (3b, 3c) and a waking wind turbine (3a, 3b) waking the waked wind turbine (3b, 3c),
- for a period of time measure or register multiple sampling parameters at the waked wind turbine (3b, 3c) covering a range of wind directions (10),
- calculate a relation factor (40) based on a relation between the sampling parameters of the waked wind turbine (3b, 3c) and similar sampling parameters of a second wind turbine (3),
- use the relation factor (40) to identify a wake position (30, 30new),
- control a waking wind turbine (3a, 3b) of the waked wind turbine (3b, 3c) based on a correction related to the identified wake position (30, 30new).

The invention further relates to a controller to perform the method, and a wind turbine or wind farm being controlled accordingly.

## Description

Wind farms (also referred to as wind parks or wind power plants) are collections of multiple wind turbines operating together to produce power (electricity). Usually, they positioned in the same location often at a substantially limited area. It is well-documented the combined power production of the wind farm may experience losses due to wake-effects, which relates to the reduction in wind speed that occurs downstream of a wind turbine for a given wind direction. When wind passes through the rotor of a turbine, some of the kinetic energy in the wind is extracted to generate electricity, resulting in a slower wind flow behind the turbine. The wake effect can impact the performance of downstream turbines by reducing their power output.

It is often assumed that the wind and its resulting wake progress in straight lines down the wind farm. However, in reality, the propagation is more complex and can exhibit curved paths. This complexity arises from various factors such as atmospheric stability, terrain variations, and wind shear, which influence the direction and behavior of the wake.

The position of the wake is therefore not steady but can change over time.

Wake steering is a wind farm optimization technique aimed at mitigating the negative effects of wake losses. It involves intentionally yawing (i.e., rotating) the wind turbines slightly away from the prevailing wind direction. By doing this, the wake generated by an upstream turbine is redirected away from downstream turbines, thereby reducing the impact of decreased wind speed.

The goal of wake steering is to enhance the overall efficiency and power output of the wind farm by strategically managing the wake interactions between turbines. While individual turbines may produce slightly less power when yawed, the overall energy production of the wind farm can increase because downstream turbines operate in less disturbed wind conditions. This technique requires careful analysis and real-time adjustments according to the changes of the wake positions to ensure optimal yaw angles and maximize the benefits across the entire wind farm.

### SUMMARY OF THE INVENTION

The object of the invention is achieved by the independent claims. The dependent claims describe advantageous developments and modifications of the invention.

In accordance with the invention there is provided a method to control wake in a wind farm comprising plural of wind turbines, where the method includes;
- providing a free wind at the wind farm, where the free wind includes a free wind direction,
- using the free wind direction to identify at least one waked wind turbine and a waking wind turbine waking the waked wind turbine,
- for a period of time measure or register multiple wake wind sampling parameters at the waked wind turbine covering a range of wind directions,
- calculate a relation factor based on a relation between the wake sampling parameters of the waked wind turbine and similar free wind sampling parameters of a second wind turbine,
- use the relation factor to identify a wake position,
- control a waking wind turbine of the waked wind turbine based on a correction related to the identified wake position.

This allows for the wake control such as wake steering of the wind turbines in the wind farm to related to more present wake positions of the wind turbines in case the wake positions had shifted.

The use of the relation factor to identify a wake position may be with reference to a waking or a reference wind turbine. This would link the wake position directly to e.g. to a waking wind turbine, which then is controlled accordingly, or with the reference turbine where the free wind is registered or estimated allowing a direct calibration of the free wind at the waked turbine location.

The wake position in the present is a wind direction where the waked turbine is wake (e.g. full wake) of a waking wind turbine.

The second wind turbine may be a free wind turbine not waked by other wind turbines. In this case the free wind sampling parameters of the second wind turbine can be a normalization factor. This could make the wake position more clearly detectable from the data.

Alternatively, or additionally, the second wind turbine could be the waking wind turbine thus relating the detection to the waking wind turbine contribution to a possible aggregated wake.

The relation factor may be formed as a division or extraction of the free wind and waked wind sampling parameters.

The wake position may be estimated based on a change of the relation factors seen over a range of wind directions.

The range of wind directions may be such the cover a previously detected wake position.

In case of a division of the wake wind and free wind sampling parameters to form the relation factors, the change may form a dip if the wake wind sampling parameters are dived with the free wind turbine sampling parameters, or a top, or peak, in the reverse situation.

In case of for example an extraction of the free wind and wake wind sampling parameters to form the relation factors the change may be a change of sign, such as going from basically zero to negative or positive.

The change may further be seen, or be related, to a threshold. This for example could be only when e.g. the dip of the division relation passes a certain depth from a base value (e.g. valued 1 if the free wind sampling parameters operate as normalization data) with a certain value, the threshold, then will they be regarded as a wake detection. In the same manner by extraction, only when the values pas e.g. a certain minus value will they be regarded as a wake detection.

To make the detection more clearly visible among multiple data the method may further include a wake position identification by fitting a smoothed curved on the relation factors to form a wake shape.

A waked wind turbine will be in the wake of a waking wind turbine over a range of wind directions, but there will be a direct wake at a wind direction where the wake effect will be largest. For the wind directions slightly offset to both sides of this wind direction, the wake effect will start to diminish. This forms the curve shape that is more easily detectable by the smoothed curve. Further, the centre of this curve-shaped feature can be used to estimate the wake position.

In one embodiment a previously identified wake position may have been detected (e.g. by the means according to any of the embodiments) to be used in wake steering. The method may include to identify a new wake position for a waked wind turbine, where the method is used to calibrate the wake steering by identifying a new wake position.

The new wake position may replace the previous wake position used in the wake steering, thus making up for a possible drift or change in the wake position or could be used to make a calibration correction in the wake steering.

The free wind and wake wind sampling parameters could include one or more of wind speed, generated wind turbine power ratio, power difference, cubic rood of power, current, torque etc., the rotor speeds, the forces acting on the blades, the blade loads and/or tower vibrations etc.

The free wind sampling parameter may be a wind speed and the waked wind sampling parameter may be estimated at the waked wind turbine. This is easily available data that can directly be compared. To compensate for a measurement of the free wind at a different location, for the calculation of the relation factors the free wind speed is corrected by an estimated propagation time compensation to counter the delay for the variations in the free wind to reach the waked wind turbines.

The present further relates to the controller adapted to control according to the method according to any of the embodiments.

The present invention further relates to a wind turbine and/or wind farm being controlled according to the method or controller of any of the embodiments.

### BRIEF DESCRIPTION OF THE DRAWINGS

Embodiments of the invention are now described, by way of example only, with reference to the accompanying drawings, of which:
Figure 1 shows a schematic and typical electrical supply and distribution system supplied by power produced by a plural of wind turbines in a wind farm.
Figure 2 shows an upstream wind turbine waking a downstream wind turbine.
Figure 3 illustrates wake steering of wind turbines.
Figure 4 illustrates a curving wind direction in a wind farm causing an error to wake steering.
Figure 5 illustrates wake steering of wind turbines including a wake position correction according to a first embodiment of the invention.
Figure 6 illustrates wake steering of wind turbines including a wake position correction according to a second embodiment of the invention.
Figures 7A and 7B illustrates wake position detection from relation factors showing a wave-formed dip.
Figure 8 illustrates a flow chart of an embodiment of the invention.
Figure 9 illustrates wake steering where the detected wake position is used to compensate the reference for the look-up table, which provides the optimum yaw offset optimized for the case where the wind is propagating in straight lines. The illustration in the drawings is in schematic form. It is noted that in different figures, similar or identical elements may be provided with the same reference signs.

### DESCRIPTION OF THE DRAWINGS

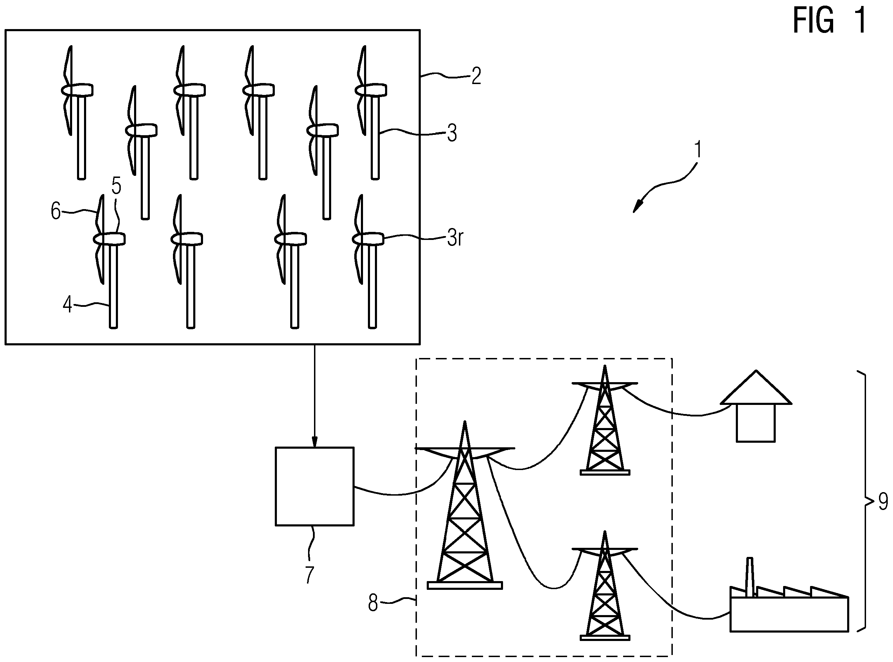

Figure 1 is a schematic illustration of an electrical supply and distribution system 1. The power is supplied a renewable power source, which could be in the form of a collection of wind turbines 3, also referred to as a wind farm 2, or wind park.

The individual wind turbines 3 each are formed with a tower 4 and a nacelle 5 which comprises a hub and a rotor with blades 6 to catch the wind. A generator is connected to the rotor to convert a rotation into electrical power.

The generated power is feed to distributions systems 7 including substations, transformers etc. From the distribution systems 7 the power is feed to the electrical distribution grid 8, or utility grid, to be provided as power for end users 9.

A wind turbine 3 usually is operated with set turbine parameters settings to maximize power production, or generation, such as operating as close to the Betz-optimal coefficient as possible.

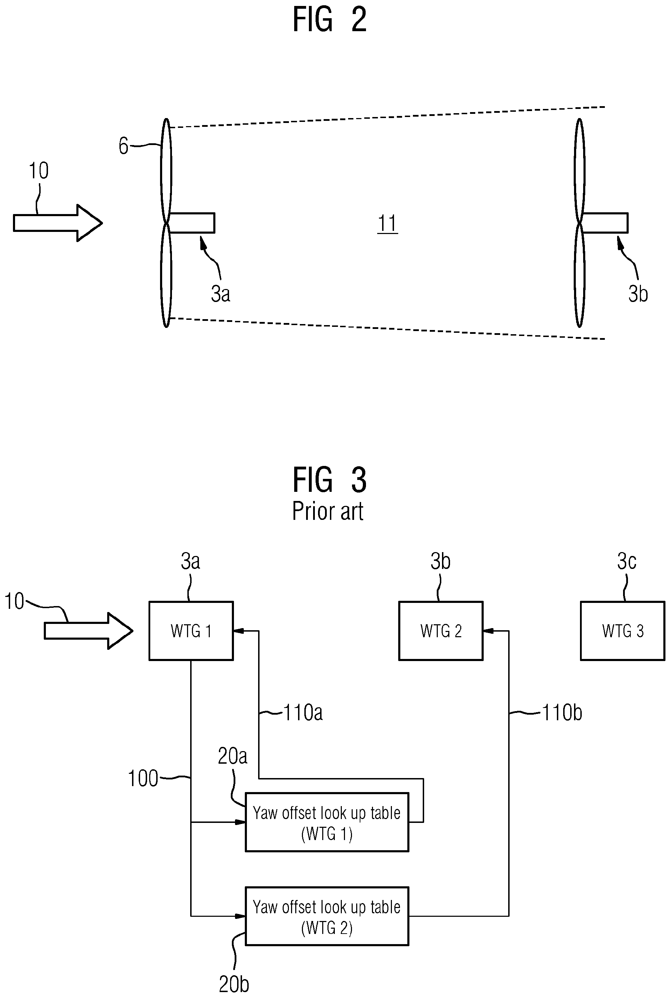

In a wind farm 2 these turbine parameters may not be the optimal seen in relation optimizing the total wind farm Annual Energy Production (AEP). As illustrated in figure 2, in dependence of a wind direction 10, an upstream wind turbine 3a may fully or partly wake a downstream wind turbine 3b. The upstream wind turbine 3a thus generates a downstream wake region 11 making the downstream wind turbine 3b producing less power than what is expected according to its set turbine parameters.

It has been found that a slight reduction in power production of the upstream wind turbine 3a may increase the power generated by the one (or more) waked downstream wind turbine(s) 3b, leading to a higher combined power generation. For the whole wind farm 2 this may lead to an improvement of the Annual Energy Production (AEP).

Figure 3 illustrates three wind turbines 3a, 3b, 3c. A present wind direction 10 is illustrated by the arrow. For this wind direction 10 the first wind turbine 3a is upstream of the second wind turbine 3b, and the second wind turbine 3b is upstream of the third wind turbine 3c. The first wind turbine 3a in the illustration is un-waked observing a free wind (not affected by upstream wind turbines 3). In the present un-waked wind turbines 3a is referred to as free wind turbines 3a. The free wind turbine 3a may also be a reference wind turbine 3r.

Wake steering is where wakes are deflected by yaw and/or pitch offsets of waking wind turbines 3a, 3b. Based on for example an engineering model yaw offsets settings may be applied to each turbine 3 in the wind farm to increase power output by reducing wake losses. This optimization might assume that the wind flow is propagating in strait lines. Based on free wind input yaw offset settings may be adjusted according to wind inflow conditions (wind direction 10, speed, turbulence) and the operational state of the turbines 3.

In the illustration of figure 3, a free wind is registered with a wind speed and a wind direction 10. The free wind may be measured, registered, or estimated by any suitable means, such as by an anemometer, by translating various sensor signals on the wind turbine 3a, 3r into a free wind estimation etc. In one embodiment the free wind data is a shared reference to multiple wind turbines 3. Possible only one free wind reference is generated for a wind farm 2 shared with all the wind turbines 3. The free wind may be measured by one or more preselected reference wind turbines 3r. In embodiment the location of free wind measurements relates to a site prevailing or present wind direction, e.g. done at or by an upstream and at least substantially un-waked wind turbine 3a. Alternatively a weather forecast is used to estimate the free wind.

As illustrated the free wind turbines 3a may wake one or more downstream wind turbines 3b, 3c being in its wake region 11. Such downstream wind turbines 3b, 3c in the following is referred to as waked wind turbines 3b, 3c. For the situation of figure 3 the wind turbine 3b is in the wake region of the wind turbine 3a (the free wind turbine), and the wind turbine 3c is in the wake region of both wind turbines 3a, 3b.

In the control scheme as illustrated, the free wind sampling parameter 100 input is feed as input to an offsetting element 20a associated with the control of the free wind turbine 3a. In the same manner it may be used as input feed to one or plural (possible all) offsetting elements 20b associated with the control of other waking wind turbines 3b.

The free wind sampling parameters 100 may be a free wind including a free wind speed and free wind direction 10 measured or registered at the free wind turbine 3a. Alternative parameters could be free wind generated wind turbine power ratio, power difference, cubic rood of power, current, torque etc., the rotor speeds, the forces acting on the blades, the blade loads and/or tower vibrations etc. These would be base-line parameters corresponding to operation of a wind turbine 3 in free wind conditions.

In much of the following the free wind sampling parameter 100 may be exemplified as a free wind.

The offsetting elements 20a then translates the free wind sampling parameters 100 into correction settings 110a, 110b for the waking wind turbines 3a, 3b.

The correction setting 110a, 110b may be provided via linear or nonlinear relations, be based on optimization algorithms etc., or may be provided via simple look-up tables 20a, 20.

The offsetting elements 20a, 20b may be actual papers documents, for example books with look-up tables to be read by an operator to find the correction settings 110a, 110b. They may also be for example digital and stored in a processor and/or a data-memory of any kind, the adjustment being done automatically via a controller.

Based on different pre-defined parameters, the free wind sampling parameter 100, wind turbine 3a, 3b present setting parameters etc., a translation then into correction settings 110a, 110b then is done manually, electronical, and/or digital.

The first wind turbine 3a in the example of figure 3 then is being controlled via an offsetting element 20a, and the second wind turbine being controlled via a second offsetting element 20b etc. Naturally any number of offsetting elements 20a, 20b may apply, such as one for each of the wind turbines 3 in the wind farm 2.

The offsetting elements 20a, 20b may include pre-defined parameters (e.g. as expressed in look-up tables (LUTs)) formed as the result of offline optimization assuming ideal calibration of wind sensors and strait-lines wind propagation down the wind farm. These then are the parameters in look-up tables (LUTs), linear or nonlinear relations etc.

The correction settings 110a, 110b is feed to the controllers of the wind turbines 3a, 3b making them operate with offset turbine parameters, such as changing the yaw offset and/or pitch slightly relative to optimum according to the wind direction 10.

Though the pre-defined parameters may be relatively precise giving optimal power production at one time, this for various reasons later may become relatively erroneous. This could be due to intrinsic reasons like wear and tear of the components of the individual wind turbines 3 and/or due to extrinsic reasons like changes of the surrounding terrain or topography etc.

In some embodiments only waking wind turbines 3a, 3b are corrected, such as for the example of figure 3 where the first wind turbine 3a being the free wind turbine and the second wind turbine 3b being both a waking wind turbine.

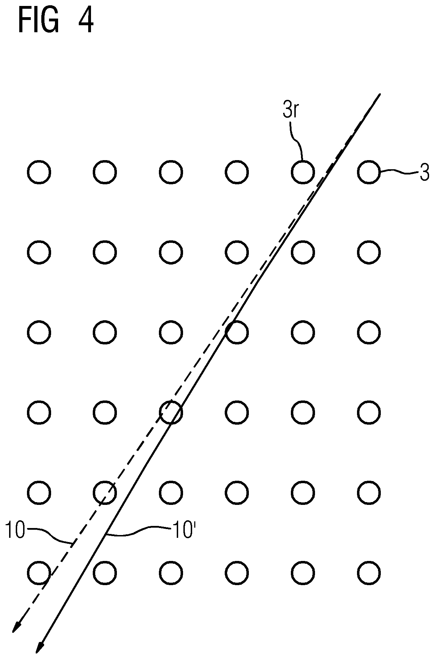

Figure 4 illustrates another observed problem, the figure illustrating a wind farm 3 formed as an array of wind turbines 3 with a free wind turbine being a reference wind turbine 3r. The dotted arrow 10 illustrates the expected direction of wind 10 due to the measurement by the reference wind turbine 3r passing the wind farm in substantially straight line. Observations however has shown a tendency for the actual wind to curve in its passing of the wind farm, as illustrated by the solid arrow 10'. This may change over time. Again, it may cause an error in wind turbines 3a, 3b, being corrected 110a, 110b wrongly, the actual direction of wind of a waked wind turbine 3b, 3c being slightly different than what is expected according to the measured or estimated free wind.

The present invention aims to solve problems based on erroneous expectations to the free winds at the individual wind turbines 3, by introducing a method and system for calibration of the wake related controls.

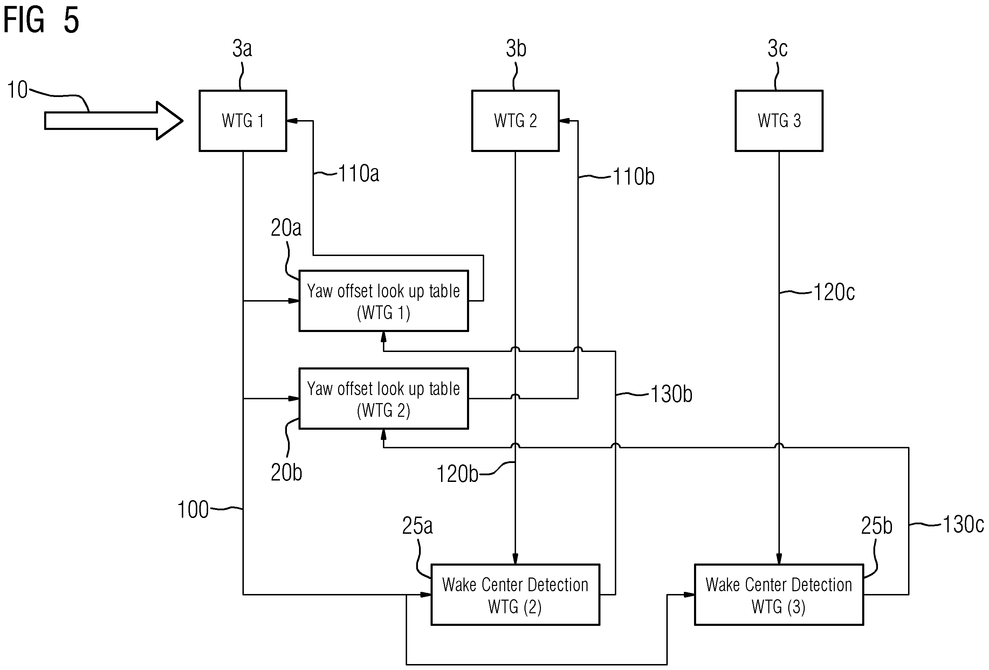

Figure 5 illustrates a solution according to embodiments of the present invention. The figure shows the same setup as figure 3 including offsetting element 20a, 20b, but includes in addition calibration means 25a, 25b. As illustrated a calibration means 25a, 25b of a waking wind turbine 3a, 3b takes wind turbine feedback data 120b, 120c from a waked wind turbine 3b, 3c, more particular from a waked wind turbine 3b, 3c waked by said waking wind turbine 3a, 3b. In the illustration the first wind turbine 3a associated calibration means 25a is feed with wind turbine feedback data 120b from the second wind turbine 3b, and the second wind turbine 3b associated calibration means 25b is feed with wind turbine feedback data 120c from the third wind turbine 3c.

The calibration means 25a, 25b input includes the free wind sampling parameters 100 and waked wind sampling parameter 120b, 120c data from the waked wind turbines 3b, 3c where the waked wind sampling parameters 120b, 120c in the illustrated embodiments includes an estimated free wind speed and optionally free wind direction 10 as observed by the individual waked wind turbines 3b, 3c. This for example could be estimated by fusion of multiple sensors as power, speed and blade pitch angle. Outputted from the calibration means 25a, 25b is wake position calibrations 130a, 130b feed as input to the offsetting elements 20a, 20b. In the illustration the calibration means 25a feeds wake position calibrations 130a to the offsetting elements 20a associated with the control of the free wind turbine 3a and the calibration means 25b feeds wake position calibrations 130b to the offsetting elements 20b associated with the control of the free wind turbine 3b.

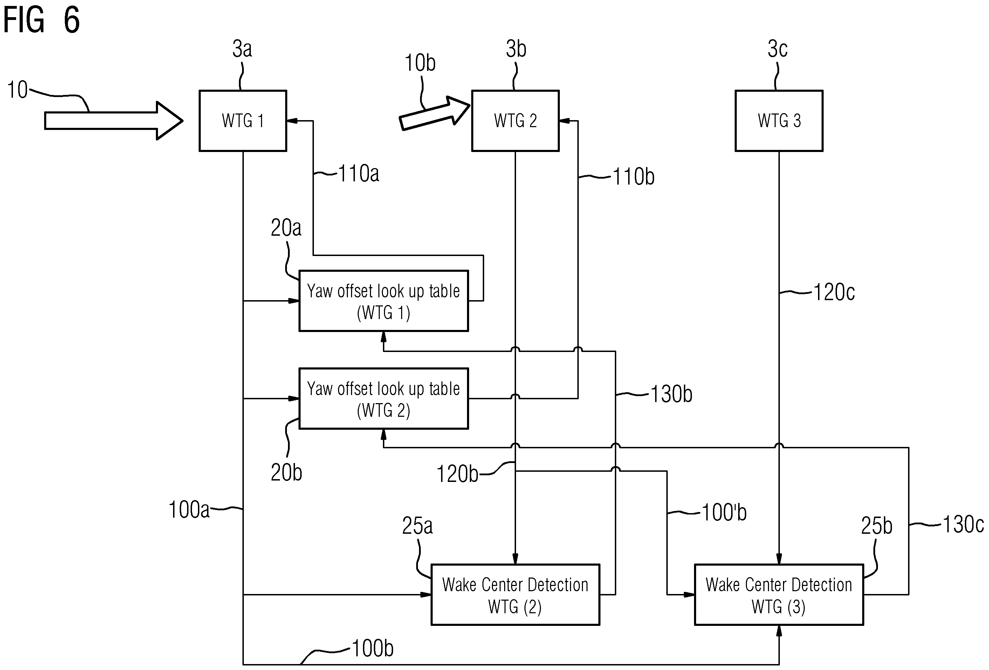

Figure 6 illustrates a second embodiment differing from fig-ure 5 in that different free wind sampling parameters 100a, 100b are inputted to the calibration means 25a, 25b. For the calibration means 25a associated with the control of the free wind turbine 3a the free wind sampling parameters 100a includes optionally the free wind speed and free wind direction 10. For the waked wind turbine 3b the free wind sampling parameters 100b includes the free wind speed only, and a second free wind sampling parameters 100'b is feed from the second wind turbine 3b including an estimated turbine wind direction 10b at said second wind turbine 3b. The wind direction 10b could be estimated by different means like how the wind affects the wind turbine 3 blades 6.

Alternatively, the second free wind sampling parameter 100'b input is provided as output from upstream calibration means 25a associated with the control of upstream wind turbines 3a, 3b (either free wind turbines 3a or other waking wind turbines 3b). This would enable previously calibrated data from the upstream calibration means 25a to be used in the downstream calibration means 25b associated with downstream wind turbines 3b. This could allow for example for a quicker response if the 'error' originates in or around one of the most upstream of the wind turbines 3a, 3b.

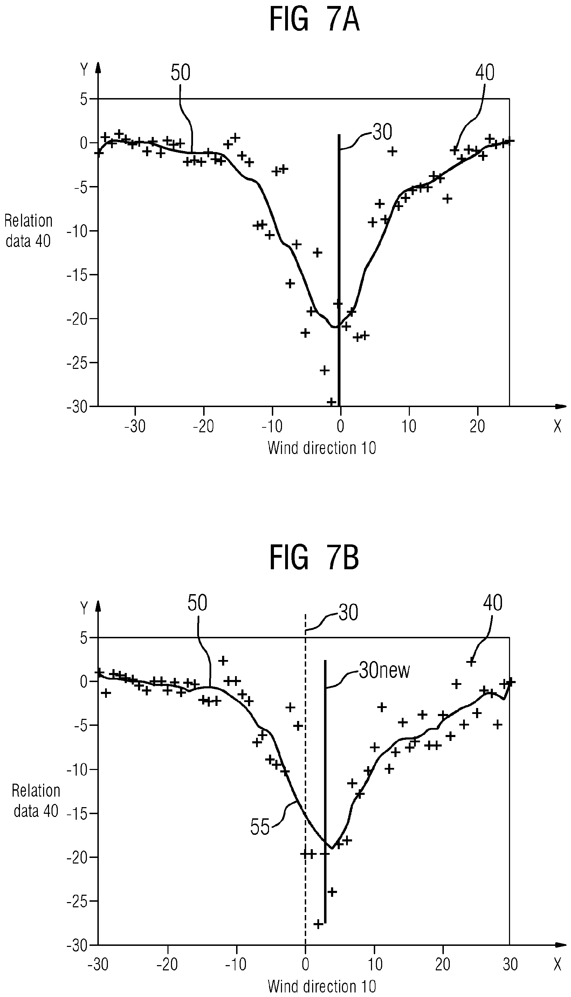

At some stage in time, such as during the installation of the wind farm 2, for the individual wind turbines 3 wake positions are registered, such as seen by the line 30 in figure 7A for one waked wind turbine 3b. The X-axis shows the wind directions 10 and the Y-axis a relation factor 40 based on respectively the free wind sampling parameters 100, 100a, 100b and the waked wind sampling parameters 120b, 120c. Several such wake positions 30 may be formed for each wind turbine 3 for each wind direction 10 (or sub-ranges of wind turbine directions 10) where they may be waked by other wind turbines. The wake positions 30 then may be stored in a wake buffer being used in the offsetting elements 20a, 20b to generate the correction settings 110a, 110b.

For the each of the waked wind turbines 3b, 3c relation factors 40 are calculated based on a relation between sampling parameters 120b, 120c registered from a waked wind turbine 3b, 3c to the free wind sampling data 100, 100a, 100b. In other words, it could be a relation between waked wind sampling parameters 120b, 120c registered from a downstream wind turbine 3b, 3c to an upstream wind turbine 3a, 3b. The relation factor 40 may be wind turbine 3 waked wind sampling parameters 120b, 120c of a downstream (or waked) wind turbine 3b, 3c divided by a similar free wind sampling parameters 100, 100a, 100b of an upstream (or waking) wind turbine 3a, 3c. In one embodiment the upstream wind turbine 3a, 3b is a free wind turbine 3a, or even a reference wind turbine 3r. The free wind sampling parameters 100, 100a, 100b from the free wind turbines 3a, 3r being un-waked would thus form normalization data relative to the waked wind sampling parameters 120b, 120c from the waked wind turbines 3b, 3c.

In one embodiment the upstream wind turbine 3a is waking wind turbine for the downstream wind turbine 3b, 3c.

Several of such sets of relation factor 40 may be formed for at least some of the wind turbines 3b, 3c, each covering a wake direction of the respective wind turbines 3b, 3c, or a specified range of wake directions. A wake direction in the present context refers to a wind direction 10 where a wind turbine 3b, 3c experience wake one or more other wind turbines 3a, 3b. A range of wake directions refer to a plural of wake directions 10 for which a downstream wind turbine 3b, 3c is in the wake of an upstream wind turbine 3a, 3b.

In figure 5, free wind signals are used as reference for wake position detection, yaw offsets as outputted from the offsetting elements 20a, 20b (for example look-up tables) etc. This has the advantage of undisturbed signals and input that can give a more accurate estimates with small noise disturbances.

In figure 6, the references inputted to the offsetting element 20a, 20b for wake position detection yaw offset outputting etc. is related to an upwind, possible waking, wind turbine 3a, 3b. This has an advantage for long rows of wind turbines 3, where the free wind turbine 3a, 3r may have a weak correlation with the far-away waked wind turbines 3b, 3c. 'Far-away' may refer to a far distance relative to the layout dimensions of the wind farm 2, and/or that a significant number of wind turbines 3 between a free wind turbine 3a, 3r and the waked wind turbine 3b, 3c.

A combined solution may be to use the approach in figure 5 for the first wind turbines 3 for a wind direction 10 (for example 3-5) and use the approach in figure 6 for the remaining wind turbines 3 in long rows. This would ensure low noise input for the first wind turbines but reduce the low correlation problems of the later wind turbines 3.

The figure 7A illustrates a plural of such relation factors 40 measured for a pair of wind turbines 3 over a range of wind directions 10. It is seen the relation factor 40 shows a dip in the area around the wake position 30, in the embodiment set as the basic wind direction of zero degrees. The dip in the example illustration is visible at least between +30 and -30 degrees around the basic wind direction, with a more profound dip between about +10 and -10 degrees. These ranges could be regarded as the ranges of wind directions.

The figure further shows a smoothed curved 50 fitted on the relation factor 40 which could be done e.g. by apply a smoothing function or moving average function to form a wake shape based on the relation factor 40. Here the dip 55, or deepening in the smoothed curved 50, is more clearly visible.

Though the example embodiments of the present invention refer for the relation factor 40 to be a relation by division, it may also be a subtraction, addition, multiplication, or even the reversed division giving a top rather than a dip 55 etc. For either an identifiable relative wake is detectable, such as a dip 55, a top or peak, negative values below a threshold, positive numbers above a threshold etc. In the following the identifiable relative wake will be exampled by a dip 55.

A centre of the dip (or top etc.) of the wake relation factor 40 are identified by any suitable means. This centre then can then be identified as a wake position 30. This method may be used at the startup or testing of the wind farm 3 at installation, the wake relation factor 40 e.g. represented by the smooth curve 50 being used in the offsetting elements 20a, 20b to create the needed pre-defined parameters, look-up table etc. In one embodiment the centre of the smoothed curve dip 55 can then be identified, e.g. by finding it minimum, mass detection algorithms etc.

It may be pre-defined for which pairs of wind turbines 3 the relation factor 40 is to be calculated. This would ease the calculations, as no further identification of suitable pairs of wind turbines 3 is required.

Alternatively suitable pairs of wind turbines 3 may be identified based on a wind direction 10, possible a prevailing wind direction 10 over a period of time, or an actual present wind direction 10 etc. The advantage is the most suitable pairs off wind turbines 3 can be identified at the actual conditions (topography, wear, and tear etc.), such as respectively a waked wind turbine 3c and a wind turbine 3b by which it is waked, thus creating a direct waking relation between the two wind turbines.

Suitable free wind sampling parameters 100, 100a, 100b and waked wind sampling parameters 120b, 120c are extracted from the wind turbines 3 to form the relation factor 40. They have been illustrated to form respectively a free wind and waked wind and the waked wind turbines 3b, 3c, but could alternatively, or additionally, be generated wind turbine 3 power ratio, power difference, cubic rood of power, current, torque etc., the rotor speeds, the forces acting on the blades 6, the blade loads, tower vibrations etc. For most existing wind turbines 3 each such parameters are available and are being registered and measured by any suitable means.

The sampling parameters 100, 100a, 100b, 120a, 120b may be registered in a buffer or database of any kind, such as on paper or in any suitable electrical means like digital storages, possible being part of the controllers of the individual wind turbines (turbine controllers) or the whole wind farm 2 (wind farm controllers). They are registered over a time period to have a sufficient range of different wind directions 10 to make a suitable smoothed curve 50 around a wake position 30, or just to identify a centre to be associated as a wind position 30, 30new.

Figure 7B illustrates similar relation factor 40, only after the wind farm 2 has been operating for a period, e.g. months or years.

The same (previous) wake position 30 as in figure 7A is seen, which now is offset to the new centre of the dip 55, the new wake position 30new. Of various reasons the new wake position 30new has shifted from the previous wake position 30. As indicated above, the wake position 30 may be stored in a wake buffer used for wake steering control by e.g. the correction settings 110a, 110b from the offsetting elements 20a, 20b. If the actual present wake position 30new is different from the wake position 30 of the wake buffer, the control may be erroneous.

A solution according to the present invention is to use the new wake position 30new in a calibration of the wake steering.

This may be done by replacing the previous wake position 30 used in the wake steering (e.g. in the wake buffer) with the new wake position 30new, the wake position calibrations 130a, 130b containing the new wake positions 30new, and possible information to replace the stored wake positions 30 with the new values.

In another embodiment only a calibration value for the stored wake position 30 is contained in the wake position calibrations 130a, 130b, possible including information to use the calibration. The calibration value then is based on the new wake position 30new.

This can be done on a regular or irregular basis, e.g. when a registered new wake position 30new differs more from the previous wake position 30 than a threshold value. It could also simple be a standard to change to newly measured wake positions 3new after a given period of time (for example each month or year), and/or after a sufficient range of different wind directions 10 are recorded etc.

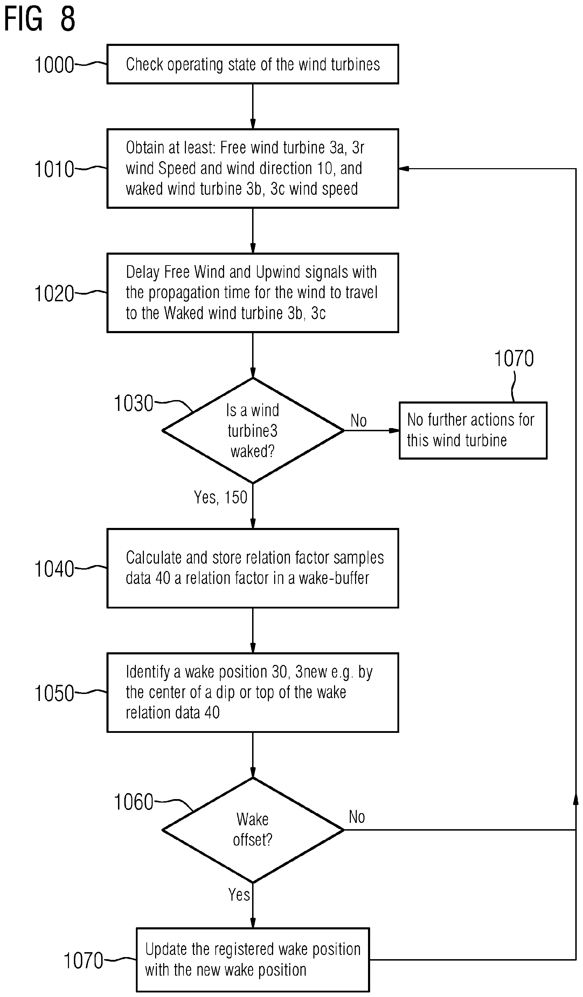

Figure 8 illustrates in more details an embodiment method to calibrate the wake steering, including the detection of a wake position 30, 30new.

The method includes a step 1000 of checking the operating state of the wind turbines 3. Particularly, it includes a check if the wind turbines 3 are being operated in a curtailed state. If some or all of the wind turbines are running curtailed, thus may need to be compensated in the estimates of their operation and the calculations of the relation factors 40. This step may be omitted if wake steering is only to be introduced for wind turbines 3 operating in wake mode, in which case the check is irrelevant.

In a step 1010 the wind turbine feedback data values 120b, 120c are obtained together and the free wind input 100, 100a, 100b. These values may be average values, e.g. seen over a given number of samples, and / or the samples over a given period of time. This could be e.g. in the range of 100-1000 seconds, or more specifically 200-500 seconds, or around 300 seconds, or any other suitable period of time. The wind turbine feedback data values 120b, 120c may include the wind speed and direction 10b as detected by the waked wind turbines 3b, 3c,

Often the wind is not measured at the individual wind turbines 3, then the values are measured by other means like the generated power, blade loads, tower vibrations, generator torques, speed of rotations of the rotor etc., and then translating this into estimated wind speed and optionally directions 10b.

In a step 1020 a propagation time compensation is introduced to counter the delay for the free wind to reach from the place of measurement/estimation (e.g. a reference wind turbine 3r) to the waked wind turbines 3b, 3c. For example, if there is 600m between a reference wind turbine 3r and a waked wind turbine 3b, and the free wind speed is 10 m/s, then a delay of 60 seconds is introduced.

In an optional step 1030 it is checked if the free wind direction 10 results in waked wind turbines 3b, 3c, meaning they are in a (possible pre-defined) wake sector 11. If the answer is 'No' then no further action 1100 is to be taken for the respective wind turbines 3b, 3c. If the answer is 'Yes' 150, then the algorithm progresses to next step 1040.

In the step 1040 a relation factor 40 factor is calculated and stored in a wake-buffer. This wake-buffer may be a digital memory in a processor or any other means like a piece of paper. The relation factor 40 sets a relation like a ratio or difference between wake wind sampling parameters 120b, 120c and free wind sampling parameters 100, 100a, 100b. This could for example be the estimated waked wind speed at a waked wind turbine 3b, 3c, and the free wind speed. In alternative versions sampling parameters includes one or more of measured power ratio, power difference, cubic root of power, blade loads, tower vibrations etc. of the waked wind turbines 3b, 3c, seen in relation to the expectations due to the free wind speed and the actual registered values.

A plural of such relation factors 30 are stored for the individual wind turbines 3 covering a range of free wind directions 10.

In a next step 1050 a wake position 30, 30new is identified based on the wake relation factor 40. This may be done by estimating or finding a centre of the dip (or top etc.) of the wake relation factor 40 by any suitable means. This centre then can then be identified as a wake position 30, 30new. The wake position 30, 30new detection can be done initially at the startup or testing of the wind farm 3 at installation and is used for wake steering and stored for example in a wake buffer.

The wake position 30, 30new may be identified by fitting a curve 50 to the relation factor 40, such as a smoothed curve 50, for example by applying a smoothing function or moving average function to form a wake shape based on the captured relation factors 40. In one embodiment the centre of the smoothed curve dip 55 can then be identified, e.g. by finding it minimum, mass detection algorithms etc.

Step 1060 is a detection for a wake offset if the wake position 30 has shifted. This can be done for example checking of a new measured wake position 30new differs from the existing stored wake position 30, such as if it differs more than a threshold value. If the answer is 'No', then then no further actions are taken, but the method may go back to a previous step, such as illustrated step 1010.

In a step 1070, if the answer is 'Yes', then the new wake position 30new is registered as the wake position 30 for the continued wake steering of the respective waking wind turbine 3a, 3b. Alternatively a calibration value is for example added to the registered wake position 30.

The registered wake position thus may be used to compensate the reference for the yaw offset look-up table, or more generally in the offsetting elements 20a, 20b.

It may be that a step such as 1070 is only included under specified conditions, such as by:
- At a minimum number of relation factor 40 samples in the wake buffer.
- The fitted (smooth) curve has shape of a curve, optionally if this curve is at least substantially symmetric around the new wake position 30new.
- The dip 55 has a minimum depth.
- A present free wind direction 10 is within a given distance to the detected new wake position 30new.

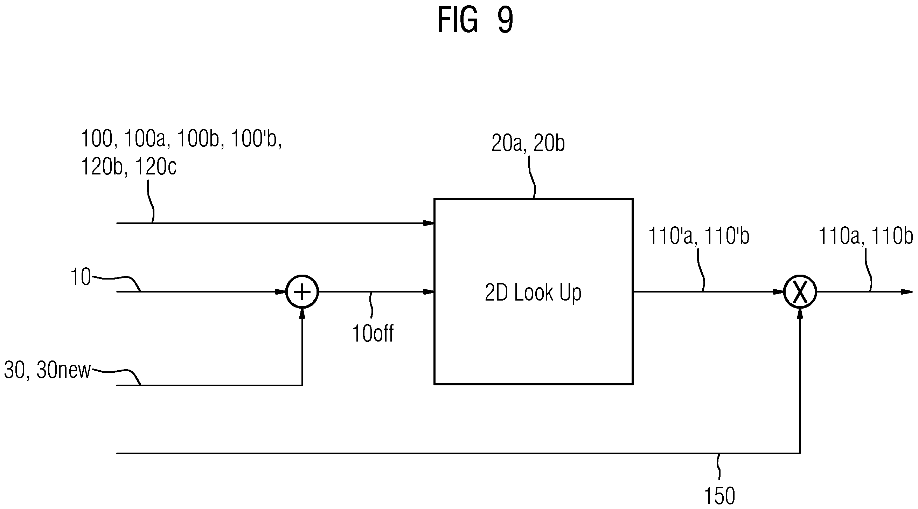

Figure 9 illustrates wake steering embodiment according to the present invention, where the detected wake position 30, 30new is used to compensate the reference for the offsetting elements 20a, 20b (e.g. look-up tables), which provides the optimum yaw offset optimized for the case where the wind is propagating in straight lines. Seen are wind inputs 100, 100a, 100b, 100'b, 120a, 120b according to any of the previous embodiments, and a free wind direction 10 estimate. In the illustration an offset wind direction 10off is inputted to the offsetting elements 20a, 20b being a sum of the free wind direction 10 and the detected wake position 30, 30new, this then been seen as the calibrated wind direction for the wake steering. Outputted from the offsetting elements 20a, 20b are the correction settings 110'a, 110'b which only is used for correction settings 110a, 110b wake steering of waking wind turbines 3a, 3b if a positive wake is detected 150.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

## Claims

1. Method to control wake in a wind farm (2) comprising plural of wind turbines (3), where the method includes;
- providing a free wind at the wind farm (2), where the free wind includes a free wind direction (10),
- using the free wind direction (10) to identify at least one waked wind turbine (3b, 3c) and a waking wind turbine (3a, 3b) waking the waked wind turbine (3b, 3c),
- for a period of time, to measure or register multiple waked wind sampling parameters (120b, 120c) at the waked wind turbine (3b, 3c) covering a range of wind directions (10),
- calculate a relation factor (40) based on a relation between the waked wind sampling parameters (120b, 120c) of the waked wind turbine (3b, 3c) and similar free wind sampling parameters (100, 100a, 100b) of a second wind turbine (3),
- use the relation factor (40) to identify a wake position (30) (30new),
- control a waking wind turbine (3a, 3b) of the waked wind turbine (3b, 3c) based on a correction related to the identified wake position (30, 30new).

2. Method according to claim 1, wherein second wind turbine (3) is a free wind turbine (3a) not waked by other wind turbines (3), and/or wherein second wind turbine (3) is the waking wind turbine (3a, 3b).

3. Method according to claim 1, wherein the relation factor (40) be a division or extraction of the waked wind sampling parameters (120b, 120c) and free wind sampling parameters (100, 100a, 100b).

4. Method according to any of the preceding claims, wherein the wake position (30, 30new) is estimated based on a change of the relation factors (40) seen over a range of wind directions (10).

5. Method according to claim 4, wherein the change forms a dip (55) or top *(peak)* in the relation factors (40) or a change of sign of the relation factors (40) values.

6. Method according to claim 4 or 5, wherein the change of the relation factors (40) is related to a threshold.

7. Method according to any of the previous claims, wherein the wake position (30, 30new) is identified by fitting a smoothed curved (50) on the relation factors (40) to form a wake shape.

8. Method according to any of the previous claims, wherein the wake position (30, 30new) estimate is based identifying or estimating a centre of a feature in the relation factors (40) associated with a wake.

9. Method to identify new wake position (30new) for a waked wind turbine (3b, 3c) according to any of the previous claims, wherein a previous wake position is (30) is registered and used for wake steering, and where the method is used to calibrate the wake steering by identifying a new wake position (30new).

10. Method according to claim 9, wherein the new wake position (30new) replaces the previous wake position (30) and is used in the wake steering.

11. Method according to any of the previous claims, wherein the waked wind sampling parameters (120b, 120c) and free wind sampling parameters (100, 100a, 100b) include one or more of wind speed, generated wind turbine (3) power ratio, power difference, cubic rood of power, current, torque etc., the rotor speeds, the forces acting on the blades (6), the blade loads and/or tower vibrations.

12. Method according to any of the previous claims, wherein the waked wind sampling parameters (120b, 120c) is a wind speed, where the second wind turbine (3a, 3b) free wind sampling parameters (100, 100a, 100b) is a free wind speed which for the calculation of the relation factors (40) is corrected by an estimated propagation time compensation to counter the delay for the free wind to reach the waked wind turbines (3b, 3c).

13. Method according to any of the previous claims, wherein the waked wind sampling parameters (120b, 120c) is a wind speed, where the second wind turbine (3a, 3b) free wind sampling parameters (100, 100a, 100b) is a free wind speed and the waked wind sampling parameters (120b, 120c) is estimated at the waked wind turbine (3b, 3c).

14. Controller adapted to control according to the method according to any of the previous claims.

15. Wind turbine (3, 3a, 3b, 3c) or wind farm (2) being controlled according to the method of any of the claims 1-12 or the controller of claim 13.
